# EUROPEAN PATENT SPECIFICATION

(11) **EP 1 925 140 B1**
(45) Date of publication and mention of the grant of the patent: **21.11.2012**
(21) Application number: 05789490.9
(22) Date of filing: 15.09.2005
(51) Int. Cl.: H04L 29/06, H04L 29/08

(54) **METHOD AND APPARATUS FOR KEEPING INFORMATION UP TO DATE AT AN IMS CLIENT**
VERFAHREN UND VORRICHTUNG ZUM HALTEN VON INFORMATIONEN AUF DEM NEUESTEN STAND IN EINEM IMS-CLIENT
PROCEDE ET APPAREIL POUR MAINTENIR DES INFORMATIONS A JOUR DANS UN CLIENT IMS

(43) Date of publication of application: 28.05.2008
(73) Proprietor: Telefonaktiebolaget LM Ericsson (publ), 164 83 Stockholm (SE)
(72) Inventor: BOBERG, Christer, S-13755 Tungelsta (SE); LINDGREN, Carl, Anders, S-12574 Älvsjö (SE); PRZYBYSZ, Hubert, S-12637 Hägersten (SE)
(74) Representative: Lind, Robert
(86) International application number: PCT/EP2005/054587
(87) International publication number: WO 2007/031115

(56) References cited:
- US-A- 5 857 201
- US-A1- 2004 015 569
- ROACH DYNAMICSOFT A B: "Session Initiation Protocol (SIP)-Specific Event Notification; rfc3265.txt" IETF STANDARD, INTERNET ENGINEERING TASK FORCE, IETF, CH, June 2002 (2002-06), XP015009043 ISSN: 0000-0003 cited in the application

## Description

### Field of the Invention

The present invention relates to a method and apparatus for maintaining information at an IMS client and more particularly for maintaining up-to-date information at an IMS client.

### Background to the Invention

IP Multimedia services provide a dynamic combination of voice, video, messaging, data, etc., within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services.

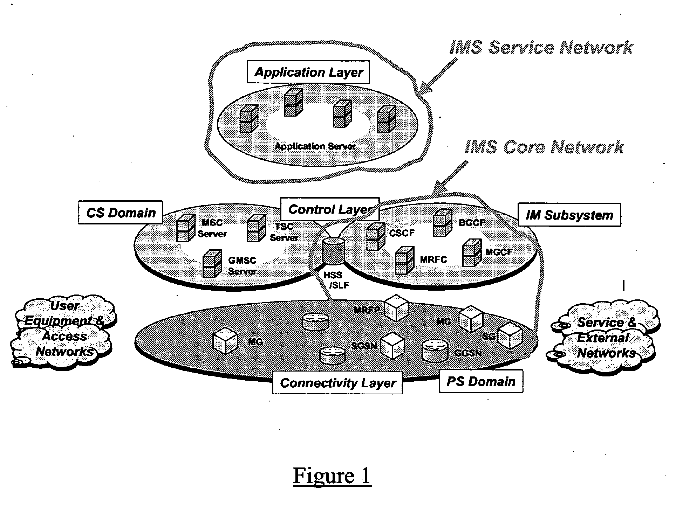

IP Multimedia Subsystem (IMS) is the technology defined by the Third Generation Partnership Project (3GPP) to provide IP Multimedia services over mobile communication networks (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. By way of example, Figure 1 illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

A user registers with the IMS using the specified SIP REGISTER method. This is a mechanism for attaching to the IMS and announcing to the IMS the address at which a SIP user identity can be reached. In 3GPP, when a SIP terminal performs a registration, the IMS authenticates the user, and allocates a S-CSCF to that user from the set of available S-CSCFs. Whilst the criteria for allocating S-CSCFs is not specified by 3GPP, these may include load sharing and service requirements. It is noted that the allocation of an S-CSCF is key to controlling (and charging for) user access to IMS-based services. Operators may provide a mechanism for preventing direct user-to-user SIP sessions which would otherwise bypass the S-CSCF.

During the registration process, it is the responsibility of the I-CSCF to select an S-CSCF if a S-CSCF is not already selected. The I-CSCF receives the required S-CSCF capabilities from the home network's Home Subscriber Server (HSS), and selects an appropriate S-CSCF based on the received capabilities. [It is noted that S-CSCF allocation is also carried out for a user by the I-CSCF in the case where the user is called by another party, and the user is not currently allocated an S-CSCF.] When a registered user subsequently sends a session request to the IMS, the P-CSCF is able to forward the request to the selected S-CSCF based on information received from the S-CSCF during the registration process.

There are a number of situations where an IMS client terminal will want to maintain data which is substantially synchronised with data maintained at a SIP application server. Consider for example a presence service, where IMS subscribers publish their presence information, e.g. current contact address, location, etc, in a database maintained at a SIP application server. This information is available to other users having appropriate access permissions. The exchange of information between users and the SIP application server may be achieved using the SIP PUBLISH and SUBSCRIBE/NOTIFY methods.

US20040015569 describes a system and method for communicating partial notifications relating to a presentity's presence information. This makes use of the SIP SUBSCRIBE and NOTIFY messages to exchange data between. User Equipment and a Presence Server within the IMS.

### Summary of the Invention

As presently specified, the SIP SUBSCRIBE/NOTIFY method only allows an IMS client to request that it be notified of certain information identified in the SUBSCRIBE method. Thus, the identified information will be sent to the client in the NOTIFY message regardless of whether or not the information has changed since the last time that the client requested the same information. The state of the art does not provide any mechanism for allowing only changed or new information to be sent to the client.

The invention is defined in the independent claims. Preferred embodiments of the invention are defined in the dependent claims.

According to a first aspect of the present invention there is provided a method of synchronising data stored at an IP Multimedia Subsystem client with data stored at a SIP application server of the IP Multimedia Subsystem, the method comprising:
receiving at the application server a SIP SUBSCRIBE request in respect of data stored at the application server, sent from the client;
   characterised by the steps of
determining whether or not the request contains within a header thereof a condition identifying the current state of the data stored at the client;
if the request does not contain a condition, sending all of said data from the SIP application server to the client within a SIP NOTIFY message; and
if the request does contain a condition, determining at the application server, from the condition, whether the data stored at the client differs from the data stored at the SIP application server and, if yes, sending the requested data to the client within a SIP NOTIFY message.

In an embodiment of the invention, if it is determined that the data currently stored at the client is up-to-date, the application server informs the client of this by sending one of an empty SIP NOTIFY or a 400 series message.

The condition identifying the current state of the data stored at the client may be one of a timestamp or version number. The condition may have been generated by the application server prior to or at the time that the currently stored data was sent to the client by the application server, or may have been generated by some other data source.

According to a second aspect of the present invention there is provided an IP Multimedia Subsystem client terminal characterised by:
a memory for storing data together with a condition identifying the current state of the data; and
means for generating and sending to a SIP application server of the IP Multimedia Subsystem, a SIP SUBSCRIBE message to refresh the stored data, the message including said condition.

According to a third aspect of the present invention there is provided a SIP application server characterised by:
a memory for storing data together with a condition identifying the current state of the data;
means for receiving from an IP Multimedia Subsystem client, a SIP SUBSCRIBE requesting a refresh of data stored at the client, the SUBSCRIBE including a condition identifying the current state of the data stored at the client;
means for comparing the received condition against the condition stored for the data in said memory; and
means for sending the data stored at the application server to said client in a SIP NOYIFY if the conditions differ.

### Brief Description of the Drawings

Figure 1 illustrates schematically the IMS architecture within a 3G network; and
Figure 2 shows signalling associated with a data publishing and data refresh procedure within the IMS.

### Detailed Description of Certain Embodiments

The general architecture of the IP Multimedia Subsystem (IMS) has already been described (Figure 1) in the context of a 3G network. In an IMS based network it is possible for a client to request data about a resource in the network handled by different application servers. The client can either fetch data on a non-regular basis, it can poll the network on a regular basis, or it can subscribe to changes that should be sent to the client in more or less real time. Some clients might prefer to use the former push solution where the network notifies the client when a change in the requested data occurs. Other clients prefer to fetch or poll for data only when it is needed. The IMS network supports these functionalities with the provided Subscribe/Notify framework (RFC 3265).

Considering the pull approach, in order to avoid the need to send information that is already cached at an IMS client, it is proposed here to include a new condition in the subscription request sent from the client which indicates to the SIP application server the current status of the cached data at the IMS client. This condition can be based on different types of indicators such as a version number, a timestamp etc. The application server will check the condition included in the subscription request and determine if the client has an up-to-date version of the data or not. In the case that the application server determines that the cached data is up-to-date, the server will inform the client that the data is up-to-date and no actual data is sent. If the server determines that the data stored in the client is obsolete, the server will send a notification including the updated data, or alternatively only the changes to the data. The notification will also include a condition that identifies the version of the new notification, e.g. version number or timestamp.

This behaviour is also possible for refresh subscription messages (the current standardisation mandates the application server to always send a full notification to a client even if the client data is up-to date). A client making use of a push method, i.e. a client that creates a lasting subscription with the application server, is required to periodically refresh its subscription to keep the subscription active in the application server. Currently, when the client refreshes its subscription (by sending a SUBSCRIBE with Expires > 0), the application server will return the stored data in a NOTIFY message. Application of the conditional mechanism described here allows such refresh to be done without the unnecessary download of data that is up-to-date. The solution is valid for any SIP-based subscription.

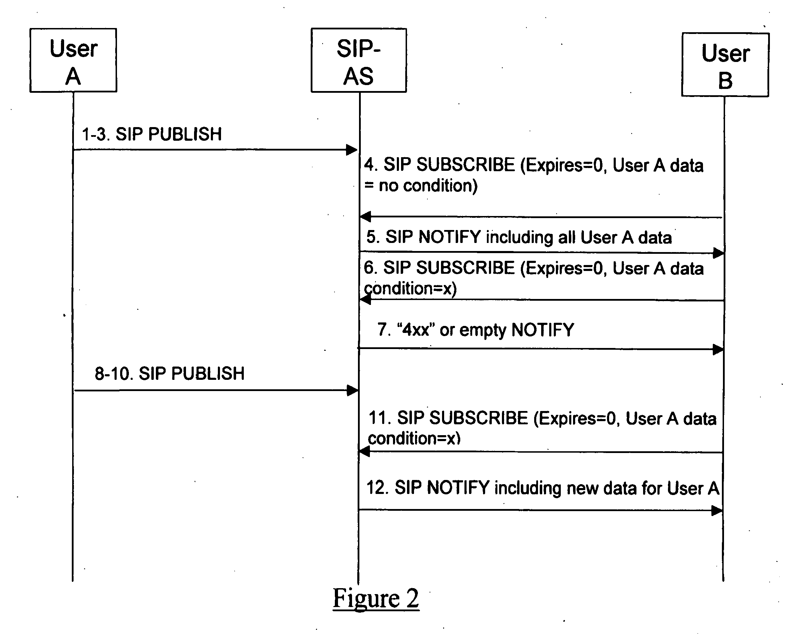

Figure 2 illustrates the IMS related SIP signaling associated with an information exchange between two IMS clients, User A and User B, where data provided by User A is maintained at a SIP application server for downloading by User B. User A uses the SIP PUBLISH method to send his data to the SIP application server (via the P-CSCF and S-CSCF) in steps 1 to 3. In this example, it is assumed that at this stage User B has not received any version of User A's data. At step 4, User B requests User A's data by sending a SUBSCRIBE message to the SIP application server. [The value of the "Expires" SIP header determines the method which the IMS client uses to obtain the data. "Expires=0" is used to fetch (pull) the data, while "Expires > 0" is used to establish a subscription which is used to get changes in the data pushed to the client.] User B does not include in the SUBSCRIBE message any condition relating to User A's data. Upon receipt of the SUBSCRIBE message by the application server, the application server determines from the absence of a condition that it must send all of User A's data to User B. It does this by including the data as payload in a SIP NOTIFY message, step 5.

At step 6, User B determines for some reason that it should contact the application server to determine if User A's data has been changed. It does this by sending a further SUBSCRIBE message. However, this time it includes in the message a condition identifying the current state of User A's data cached by User B. This condition is specified such that it can be recognised by all parties, but may be included, for example, in the SIP message header or in the payload. Based on the condition, the application server is able to determine whether the data held by it should be sent to User B. In this example, as no change has been made to the data, the application server returns to User B a "4xx" (i.e. 400 series) message or an empty NOTIFY message, step 7.

Subsequently, User A sends a further PUBLISH message to the application server containing updated data, steps 8 to 10. When User B sends a further SUBSCRIBE message to the application server at step 11, it contains a condition ("x") identifying the current version of data held for User A. Upon receipt of the Subscribe message at the SIP application server, the server determines from the condition x that the data held by User B is obsolete. The server returns to User B, in a SIP NOTIFY message, the new data for User A, step 12.

## Claims

1. A method for synchronising data stored at an IP Multimedia Subsystem client with data stored at a SIP application server of the IP Multimedia Subsystem, the method comprising:
receiving (2,4,7) at the application server a SIP SUBSCRIBE request in respect of data stored at the application server, sent from the client;
determining whether or not the request contains within a header thereof a condition identifying the current state of the data stored at the client;
if the request does not contain a condition, sending all of said data from the SIP application server to the client within a SIP NOTIFY message (3); and
if the request does contain a condition, determining at the application server, from the condition, whether the data stored at the client differs from the data stored at the SIP application server and, if yes, sending the requested data to the client within a SIP NOTIFY message (8).

2. A method according to claim 1, wherein, if it is determined that the data currently stored at the client is up-to-date, the application server informs the client of this by sending one of an empty SIP NOTIFY or a 400 series message to the client (5).

3. A method according to any one of the preceding claims, wherein said condition Identifying the current state of the data stored at the client is one of a timestamp or version number.

4. A method according to any one of the preceding claims, wherein said condition was generated by the application server prior to or at the time that the currently stored data was sent to the client by the application server, or was generated by some other data source.

5. An IP multimedia Subsystem client terminal comprising:
- means for generating and sending to a SIP application server of the IP Multimedia Subsystem, a SIP SUBSCRIBE message to request data, the message including no condition;
- means for receiving the requested data within a SIP NOTIFY message from the SIP application server of the IP Multimedia Subsystem;
- a memory for storing the data together with a condition identifying the current state of the data;
- means for generating and sending to the SIP application server of the IP Multimedia Subsystem, a SIP SUBSCRIBE message to refresh the stored data, the message including said condition;
- means for receiving the requested data within a SIP NOTIFY message from the SIP application server of the IP Multimedia Subsystem if the condition included in the SiP SUBSCRIBE differs from a condition identifying the current state of the data at the SIP application server.

6. A SIP application server comprising:
a memory for storing data together with a condition identifying the current state of the data;
means for receiving from an IP Multimedia Subsystem client, a SIP SUBSCRIBE (4,7) requesting a refresh of data stored at the client;
means for determining whether or not the SUBSCRIBE request contains within a header thereof a condition identifying the current state of the data stored at the client;
if the request does not contain a condition, means for sending all of said data from the SIP application server to the client within a SIP NOTIFY message (3);
if the request does contain a condition, means for comparing the received condition against the condition stored for the data In said memory; and
means for sending the requested data stored at the application server to said client in a SIP NOTIFY (8) if the conditions differ.

## Patentansprüche

1. Verfahren zum Synchronisieren von Daten in einem IP-Multimedia-Teilsystem-Client mit Daten, die in einem SIP-Applikationsserver des IP-Multimedia-Teilsystems gespeichert sind, wobei das Verfahren umfasst:
im Applikationsserver erfolgendes Empfangen (2, 4, 7) einer vom Client gesendeten SIP SUBSCRIBE-Anforderung in Bezug auf Daten, die im Applikationsserver gespeichert sind;
Bestimmen, ob die Anforderung in ihrem Header einer Bedingung enthält oder nicht, die den gegenwärtigen Zustand der im Client gespeicherten Daten identifiziert;
wenn die Anforderung keine Bedingung enthält, Senden aller Daten vom SIP-Anwendungsserver an den Client in einer SIP NOTIFY-Nachricht (3); und
wenn die Anforderung eine Bedingung enthält, im Applikationsserver erfolgendes Bestimmen anhand der Bedingung, ob die im Client gespeicherten Daten sich von den im SIP-Applikationsserver gespeicherten Daten unterscheiden, und wenn ja, Senden der angeforderten Daten an den Client in einer SIP NOTIFY-Nachricht (8).

2. Verfahren nach Anspruch 1, wobei, wenn bestimmt wird, dass die gegenwärtig im Client gespeicherten Daten aktuell sind, der Applikationsserver den Client darüber informiert, indem entweder eine leere SIP NOTIFY-Nachricht oder eine Nachricht der 400-Serie an den Client (5) gesendet wird,

3. Verfahren nach einem der vorhergehenden Ansprüche, wobei die Bedingung, die den gegenwärtigen Zustand der im Client gespeicherten Daten identifiziert, entweder ein Zeitstempel oder eine Versionsnummer ist.

4. Verfahren nach einem der vorhergehenden Ansprüche, wobei die Bedingung durch den Applikationsserver vor oder während der Zeit, zu der die gegenwärtig gespeicherten Daten durch den Applikationsserver an den Client gesendet wurden, erzeugt wurde oder durch irgend eine andere Datenquelle erzeugt wurde.

5. Client-Endeinrichtung im IP-Multimedia-Teilsystem, umfassend:
- ein Mittel zum Erzeugen und Senden einer SIP SUBSCRIBE-Nachricht, an einen SIP-Applikationsserver des IP-Multimedia-Teilsystems, um Daten anzufordern, wobei die Nachricht keine Bedingung aufweist;
- ein Mittel zum Empfangen der angeforderten Daten in einer SIP NOTIFY-Nachricht vom SIP-Applikationsserver des IP-Multimedia-Teilsystems,
- einen Speicher zum Speichern der Daten zusammen mit einer Bedingung, die den gegenwärtigen Zustand der Daten identifiziert,
- ein Mittel zum Erzeugen und Senden einer SIP SUBSCRIBE-Nachricht an den SIP-Applikationsserver des IP-Multimedia-Teilsystems, um die gespeicherten Daten zu aktualisieren, wobei die Nachricht die Bedingung enthält;
- ein Mittel zum Empfangen der angeforderten Daten in einer SIP NOTIFY-Nachricht von dem SIP-Applikationsserver des IP-Multimedia-Teilsystems, wenn die in der SIP SUBSCRIBE-Nachricht enthaltene Bedingung sich von einer Bedingung unterscheidet, die den gegenwärtigen Zustand der Daten im SIP-Applikationsserver identifiziert.

6. SIP-Applikationsserver, umfassend:
einen Speicher zum Speichern von Daten zusammen mit einer Bedingung, die den gegenwärtigen Zustand der Daten identifiziert;
ein Mittel zum Empfangen einer SIP SUBSCRIBE-Nachricht (4, 7) von einem IP-Multimedia-Teilsystem-Client, die eine Aktualisierung von im Client gespeicherten Daten anfordert;
ein Mittel zum Bestimmen, ob die SUBSCRIBE-Anforderung in ihrem Header eine Bedingung enthält oder nicht, die den gegenwärtigen Zustand der im Client gespeicherten Daten identifiziert;
wenn die Anforderung keine Bedingung enthält, ein Mittel zum Senden aller Daten vom SIP-Anwendungsserver an den Client in einer SIP NOTIFY-Nachricht (3);
wenn die Anforderung eine Bedingung enthält, ein Mittel zum Vergleichen der empfangenen Bedingung mit der für die Daten in dem Speicher gespeicherten Bedingung; und
ein Mittel zum Senden der angeforderten Daten, die im Applikationsserver gespeichert sind, an den Client in einer SIP NOTIFY-Nachricht (8), wenn sich die Bedingungen unterscheiden.

## Revendications

1. Procédé destiné à synchroniser des données stockées au niveau d'un terminal client de sous-système multimédia IP avec des données stockées au niveau d'un serveur d'application de protocole SIP du sous-système multimédia IP, le procédé comprenant :
la réception (2, 4, 7), au niveau du serveur d'application, d'une demande d'abonnement de protocole SIP « SIP SUBSCRIBE » relative aux données stockées au niveau du serveur d'application, envoyée par le terminal client ;
la détermination du fait que la demande contient ou non, dans un en-tête de celle-ci, une condition identifiant l'état en cours des données stockées au niveau du terminal client ;
si la demande ne contient pas de condition, l'envoi de la totalité desdites données, du serveur d'application de protocole SIP au terminal client, au sein d'un message de notification de protocole SIP « SIP NOTIFY » (3) ; et
si la demande contient une condition, la détermination, au niveau du serveur d'application, à partir de la condition, du fait que les données stockées au niveau du terminal client diffèrent ou non des données stockées au niveau du serveur d'application de protocole SIP et, le cas échéant, l'envoi des données requises au terminal client au sein d'un message de notification de protocole SIP « SIP NOTIFY » (8).

2. Procédé selon la revendication 1, dans lequel, s'il est déterminé que les données stockées à ce moment au niveau du terminal client sont à jour, le serveur d'application informe le terminal client de cet état en envoyant l'un parmi un message de notification de protocole SIP « SIP NOTIFY » vide ou un message « 400 séries » au terminal client (5).

3. Procédé selon l'une quelconque des revendications précédentes, dans lequel ladite condition identifiant l'état en cours des données stockées au niveau du terminal client est l'une parmi une estampille temporelle ou un numéro de version.

4. Procédé selon l'une quelconque des revendications précédentes, dans lequel ladite condition a été générée par le serveur d'application avant ou au moment où les données stockées à ce moment ont été envoyées au terminal client par le serveur d'application, ou ont été générées par d'autres sources de données.

5. Terminal client de sous-système multimédia IP, comprenant :
- un moyen pour générer et envoyer, à un serveur d'application de protocole SIP du sous-système multimédia IP, un message d'abonnement de protocole SIP « SIP SUBSCRIBE » destiné à demander des données, le message ne comprenant aucune condition ;
- un moyen pour recevoir les données requises, au sein d'un message de notification de protocole SIP « SIP NOTIFY », à partir du serveur d'application de protocole SIP du sous-système multimédia IP ;
- une mémoire pour stocker les données avec une condition identifiant l'état en cours des données ;
- un moyen pour générer et envoyer au serveur d'application de protocole SIP du sous-système multimédia IP, un message d'abonnement de protocole SIP « SIP SUBSCRIBE » destiné à actualiser les données stockées, le message comprenant ladite condition ;
- un moyen pour recevoir les données requises dans un message de notification de protocole SIP « SIP NOTIFY » à partir du serveur d'application de protocole SIP du sous-système multimédia IP si la condition incluse dans le message « SIP SUBSCRIBE » diffère d'une condition identifiant l'état en cours des données au niveau du serveur d'application de protocole SIP.

6. Serveur d'application de protocole SIP, comprenant :
une mémoire pour stocker des données avec une condition identifiant l'état en cours des données ;
un moyen pour recevoir, à partir d'un terminal client de sous-système multimédia IP, un message d'abonnement de protocole SIP « SIP SUBSCRIBE » (4, 7) demandant l'actualisation des données stockées au niveau du terminal client ;
un moyen pour déterminer si le message de demande d'abonnement « SUBSCRIBE » contient, dans un en-tête de celui-ci, une condition identifiant l'état en cours des données stockées au niveau du terminal client ;
si la demande ne contient pas de condition, un moyen pour envoyer la totalité desdites données, du serveur d'application de protocole SIP au terminal client, au sein d'un message de notification de protocole SIP « SIP NOTIFY » (3) ;
si la demande contient une condition, un moyen pour comparer la condition reçue à la condition stockée pour les données dans ladite mémoire ; et
un moyen pour envoyer les données requises, stockées au niveau du serveur d'application, audit terminal client, dans un message de notification de protocole SIP « SIP NOTIFY » (8), si les conditions diffèrent.
